# EUROPÄISCHE PATENTANMELDUNG

(11) **EP 1 939 761 A1**
(43) Veröffentlichungstag der Anmeldung: **02.07.2008**
(21) Anmeldenummer: 06405528.8
(22) Anmeldetag: 19.12.2006
(51) Int. Cl.: G06F 17/30, G06F 3/048

(54) **Verfahren und Vorrichtung für den selektiven Zugriff auf Datenelemente einer Datensammlung**

(71) Anmelder: Swisscom Mobile AG, 3050 Bern (CH)
(72) Erfinder: Lagadec, Roger, 8105 Regensdorf (CH)
(74) Vertreter: Rentsch & Partner

(57) **Zusammenfassung**

Für den selektiven Zugriff auf Datenelemente (171) einer Datensammlung (17) wird ein auf einer Anzeige (21) darstellbares Bilddatenobjekt (18) bereitgestellt. Es werden mehrere Bildteilobjekte definiert, die jeweils einem Teil einer Darstellung des Bilddatenobjekts (18) entsprechen. Die Datenelemente (171) werden jeweils mindestens einem der Bildteilobjekte zugeordnet. Aus einer Darstellung des Bilddatenobjekts (18) auf der Anzeige (21) wird eines der Bildteilobjekte selektiert. Dann werden die Datenelemente (171) wiedergegeben, die dem selektierten Bildteilobjekt zugeordnet sind. Ein Datenobjekt (161), welches die Datenelemente (171) der Datensammlung (17), das Bilddatenobjekt (18) und die Zuordnung (19) der Datenelemente (171) zu den Bildteilobjekten umfasst, wird für den selektiven Zugriff auf die Datenelemente (171) über ein Telekommunikationsnetz (3) an ein Kommunikationsendgerät (2) übermittelt. Die Zuordnung (19) von (gruppierten) Datenelementen (171) zu Bildteilobjekten eines Bilddatenobjekts (18) ermöglicht einen effizienten selektiven und assoziativen Zugriff auf die Datenelemente (171) einer Datensammlung (17), wobei der selektive Zugriff ohne über mehrere Seiten hinweg blättern zu müssen auch bei kleinen Anzeigen (21) mobiler Kommunikationsendgeräte (2) ermöglicht wird.

## Beschreibung

### Technisches Gebiet

Die vorliegende Erfindung betrifft ein Verfahren und Vorrichtungen für den selektiven Zugriff auf Datenelemente einer Datensammlung. Die vorliegende Erfindung betrifft insbesondere ein computergestütztes Verfahren, einen computerbasierten Server und ein Kommunikationsendgerät für den selektiven Zugriff auf Datenelemente einer Datensammlung, insbesondere Datenelemente mit einem Inhalt in Textform.

### Stand der Technik

Bei Datensammlungen, die eine Vielzahl von Datenelementen umfassen, insbesondere Datenelemente in Textform, ist es in der Regel schwierig für einen Benutzer sich eine Übersicht der Datenelemente zu verschaffen und/oder gezielt auf ein Datenelement und/oder eine Gruppe von einzelnen Datenelementen zuzugreifen. Es können zwar Listen mit den Datenelementen erstellt, gedruckt oder auf einer Anzeige dargestellt werden, doch wird dadurch das Auffinden eines gewünschten Datenelements oder einer gewünschter Datengruppe oft nicht erleichtert, beispielsweise weil die Datensammlung eine sehr grosse Anzahl von Datenelementen umfasst oder weil einzelne Datenelemente mehreren Datengruppen angehören. Typischerweise gibt es zahlreiche Aspekte und Kriterien, nach welchen Datenelemente verschiedenen Datengruppen zugeordnet werden können. Beispielsweise können Datengruppen für Datenelemente in Textform auf Grund unterschiedlicher Inhaltskategorien der Datenelemente gebildet werden, wobei ein Datenelement oft mehreren Inhaltskategorien zugeordnet werden kann. Die Datenelemente können auch auf Grund von zugeordneten Attributen wie Zeitangabe, z.B. Empfangs- oder Sendezeit, Datenquelle, Datenlieferant/Anbieter, Kommunikationskanal oder Datentyp, z.B. E-Mail oder SMS-Nachricht, einer oder mehreren Gruppen zugeordnet werden. Selbst wenn geordnete Listen der Datenelemente erstellt werden, beispielsweise nach wählbaren Ordnungskriterien, ist die Navigation durch die Listen zeitaufwendig, insbesondere wenn die Listen so gross sind, dass sie nicht vollständig auf einer Anzeige darstellbar sind und dadurch über mehrere Seiten hinweg durchsucht werden müssen, was insbesondere bei mobilen Kommunikationsendgeräten schon bei relativ kleinen Listen der Fall ist. Die Suche von gewünschten Datenelementen in einer Datensammlung wird oft mittels Suchmasken für die Eingabe von Suchbegriffen durchgeführt. Doch die gezielte Suche mittels Suchbegriffen ist oft zeitaufwendig, weil die Suchbegriffe eingegeben werden müssen und ihre Schreibweise oft inkorrekt ist und/oder der Suchbegriff nicht eindeutig bekannt ist oder in einer Vielzahl von Datenelementen vorkommt. Grafische Elemente für die Unterstützung einer visuellen Strukturierung von Sammlungen ganzer Dateien (Files) in mehrere Verzeichnisse (Directories) sind aus Benutzeroberflächen bekannter Betriebssysteme wie Windows von Microsoft Inc. oder MAC OS von Apple Inc. bekannt. Die verzeichnisbasierte Strukturierung ist typischerweise für die Organisation von Dateien jedoch nicht für die Organisation von Datenelementen ausgelegt, d.h. die Verzeichnisse führen zu einer oder mehreren Dateien, welche für den Zugang auf darin enthaltene Datenelemente jeweils einzeln geöffnet werden müssen.

### Darstellung der Erfindung

Es ist eine Aufgabe der vorliegenden Erfindung ein computergestütztes Verfahren und Vorrichtungen für den selektiven Zugriff auf Datenelemente einer Datensammlung vorzuschlagen, insbesondere Datenelemente mit einem Inhalt in Textform, welches Verfahren und welche Vorrichtungen nicht die Nachteile des Stands der Technik aufweisen. Es ist insbesondere eine Aufgabe der vorliegenden Erfindung ein computergestütztes Verfahren und Vorrichtungen vorzuschlagen, welche ermöglichen ohne Eingabe von Suchbegriffen und ohne Durchsuchen von mehrseitigen Listen selektiv auf Datenelemente einer Datensammlung zuzugreifen, insbesondere auf Datenelemente, die in Textform in einer als Datei ausgeführten Datensammlung gespeichert sind.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass für den selektiven Zugriff auf Datenelemente einer Datensammlung, insbesondere auf Datenelemente, die in Textform in einer Datenbank oder Datei gespeichert sind, ein auf einer Anzeige darstellbares Bilddatenobjekt bereitgestellt wird, dass mehrere Bildteilobjekte definiert werden, die jeweils einem Teil einer Darstellung des Bilddatenobjekts entsprechen, dass die Datenelemente selektiv jeweils einem oder mehreren der Bildteilobjekte zugeordnet werden, dass eines der Bildteilobjekte selektiert wird aus einer Darstellung des Bilddatenobjekts auf der Anzeige, und dass die Datenelemente wiedergegeben werden, welche dem selektierten Bildteilobjekt zugeordnet sind. Zum Zuordnen der Datenelemente zu den Bildteilobjekten werden die Datenelemente beispielsweise jeweils mindestens einer Datengruppe zugeordnet und die Datengruppen werden jeweils einem der Bildteilobjekte zugeordnet, so dass die Datenelemente wiedergegeben werden, die der Datengruppe zugeordnet sind, welche dem selektierten Bildteilobjekt zugeordnet ist. Das darstellbare Bilddatenobjekt ist beispielsweise ein zweidimensionales Bild, das mehrere Bildbereiche oder Bildsegmente aufweist, die von einem Betrachter als Bildteilobjekte erkannt und identifiziert werden können. Bildteilobjekte sind für den Betrachter beispielsweise auf Grund eines durch das Bildteilobjekt abgebildeten Gegenstands (Form), auf Grund seiner Farbe und/oder auf Grund explizit dargestellter Grenzmarkierungen erkennbar. Das darstellbare Bilddatenobjekt stellt beispielsweise bildlich einen konkreten mehrteiligen Gegenstand des Alltags dar, dessen Teile den Bildteilobjekten entsprechen, zum Beispiel ein Haus mit mehreren unterscheidbaren Türen und Fenstern, oder eine Pralineschachtel mit mehreren unterscheidbaren Pralinen. Das darstellbare Bilddatenobjekt wird beispielsweise in Form einer so genannten Bitmap, also als Raster mit einer Vielzahl von Bildpunkten, bereitgestellt, wobei die Bildteilobjekte durch entsprechende Teilbereiche der Bitmap, also des Rasters, definiert sind. Die Definition der Bildteilobjekte respektive Teilbereiche erfolgt beispielsweise mittels geeigneter Bildverarbeitungsalgorithmen und/oder durch einen Betrachter. In einer Ausführungsvariante repräsentiert das auf der Anzeige darstellbare Bilddatenobjekt ein dreidimensionales Raumobjekt und die Bildteilobjekte repräsentieren dreidimensionale Objekte im dreidimensionalen Raumobjekt. Die Selektion eines Bildteilobjekts im dreidimensionalen Raum umfasst eine Navigation im dreidimensionalen Raumobjekt. Die Zuordnung von (gruppierten) Datenelementen zu Bildteilobjekten eines gesamten Bilddatenobjekts ermöglicht einen effizienten selektiven Zugriff auf die Datenelemente einer Datensammlung, insbesondere auf textbasierte Datenelemente, die in einer Datei gespeichert sind. Durch Darstellen des vollständigen Bilddatenobjekts auf einer Anzeige, was auf Grund der hohen verfügbaren Anzeigeauflösungen auch bei mobilen Kommunikationsendgeräten möglich ist, wird der selektive Zugriff auf die Datenelemente (einer Datengruppe) auf der Anzeige ohne Blättern über mehrere Seiten hinweg ermöglicht. Überdies ermöglicht die Zuordnung von Datengruppen zu Bildteilobjekten einem Benutzer eine assoziative Zuordnung von Dateninhalten, insbesondere Textinhalte, zu visuellen d.h. bildlichen und/oder gegenständlichen Inhalten, was die Erinnerung an die Zuordnung und damit den selektiven Zugriff verbessert. Dadurch, dass dem Benutzer zudem ermöglicht wird das Bilddatenobjekt selber aus einer verfügbaren Sammlung zu wählen oder seine eigenen Bilddatenobjekte bereitzustellen, und/oder die Zuordnung der Datenelemente respektive der Datengruppen zu den Bildteilobjekten selber zu bestimmen, wird die individuelle Assoziationsfähigkeit und damit die Effizienz des selektiven Zugriffs weiter erhöht. Das Bilddatenobjekt und die zugeordneten Datenelemente bilden somit ein Darstellungswerkzeug um Datengruppen oder Datenkategorien (auch überlappende) möglichst intuitiv darzustellen, das zudem getauscht, weitergegeben, wieder verwendet, auf ein anderes Gerät exportiert werden kann.

In einer Ausführungsvariante wird ein Datenobjekt generiert, welches die Datenelemente der Datensammlung, das Bilddatenobjekt und die Zuordnung der Datenelemente zu den Bildteilobjekten umfasst. Die Zuordnung der Datenelemente zu den Bildteilobjekten umfasst beispielsweise die Zuordnung der Datenelemente zu den Datengruppen und die Zuordnung der Datengruppen zu den Bildteilobjekten. Das generierte Datenobjekt wird über ein Telekommunikationsnetz an ein Kommunikationsendgerät übermittelt. Das Kommunikationsendgerät umfasst ein Datenzugriffsmodul zum Darstellen des Bilddatenobjekts auf einer Anzeige des Kommunikationsendgeräts, zum Selektieren eines der Bildteilobjekte aus der Darstellung des Bilddatenobjekts basierend auf Benutzerinstruktionen, und zum Wiedergeben der Datenelemente, die dem selektierten Bildteilobjekt zugeordnet sind. Das Datenobjekt ermöglicht somit die Übertragbarkeit nicht nur der Datensammlung sondern auch der strukturierten Zuordnung der Datenelemente respektive der Datengruppe zu einem Bilddatenobjekt. Dadurch wird in entfernten Kommunikationsendgeräten ein autonomer (stand-alone) selektiver Zugriff über das Bilddatenobjekt auf die Datenelemente der Datensammlung ermöglicht, unabhängig von der Verfügbarkeit eines Telekommunikationsnetzes und/oder eines Datenservers im Zeitpunkt des selektiven Datenzugriffs.

In einer Ausführungsvariante wird ein Datenobjekt generiert, welches das Bilddatenobjekt, die Zuordnung der Datenelemente respektive Datengruppen zu den Bildteilobjekten und Angaben für den Zugriff auf die Datenelemente der Datensammlung umfasst. Ein Kommunikationsendgerät, welches ein derart ausgestaltetes Datenobjekt empfängt, stellt das Bilddatenobjekt auf einer Anzeige des Kommunikationsendgeräts dar, selektiert eines der Bildteilobjekte aus der Darstellung des Bilddatenobjekts basierend auf Benutzerinstruktionen, und bezieht von einem Datenserver die Datenelemente, die dem selektierten Bildteilobjekt zugeordnet sind, zur Wiedergabe. Das derart ausgestaltete Datenobjekt ermöglicht somit die Übertragbarkeit der strukturierten Zuordnung der Datenelemente respektive der Datengruppen zu Bildteilobjekten eines Bilddatenobjekts, ohne die gesamte Datensammlung ebenfalls übertragen zu müssen.

Vorzugsweise umfassen die Datenelemente jeweils einen Dateninhalt in Textform und den Datenelementen sind jeweils eines oder mehrere Attribute zugeordnet. Die Attribute umfassen beispielsweise eine Zeitangabe, ein Datum, und/oder eine Angabe einer Datenquelle, eines Übermittlungskanals und/oder eines Datenlieferanten. Die Zuordnung der Datenelemente zu den Bildteilobjekten respektive den Datengruppen erfolgt, vorzugsweise automatisch, auf Grund der jeweils zugeordneten Attribute und/oder auf Grund des Dateninhalts. Der Dateninhalt kann auch Bilder, Töne usw. umfassen. Beim Dateninhalt in Textform kann es sich um Sprachmeldungen handeln, die über ein Telekommunikationsgerät und insbesondere über ein Telekommunikationsnetz empfangen und in Textelemente gewandelt wurden.

In einer Ausführungsvariante ist den Bildteilobjekten jeweils mindestens eine Gruppenbezeichnung zugeordnet und das Zuordnen der Datenelemente zu den Bildteilobjekten erfolgt automatisch auf Grund der Gruppenbezeichnungen. Die den Bildteilobjekten zugeordneten Gruppenbezeichnungen stimmen vorzugsweise mit dem visuellen Inhalt des Bildteilobjekts überein, z.B. einem dargestellten Gegenstand, und werden durch den Benutzer definiert oder sind bei Bilddatenobjekten einer Objektsammlung vordefiniert.

Schliesslich soll festgehalten werden, dass die Datenstrukturen und Benutzerschnittstellen so beschaffen sind, dass sowohl eine Trennbarkeit zwischen dem Bilddatenobjekt und den zugeordneten Datenelementen als auch eine Wiederverwendbarkeit des Bilddatenobjektes mit beliebigen weiteren (noch nicht zugeordneten) Datenelementen ermöglicht wird. Das heisst, einerseits können einzelne zugeordnete Datenelemente oder zugeordnete Gruppen von Datenelementen entsprechend Benutzerinstruktionen vom Bilddatenobjekt getrennt (also die Zuordnung selektiv aufgelöst) werden, und andererseits können dem Bilddatenobjekt zusätzliche neue Datenelemente oder Gruppen von Datenelementen entsprechend Benutzerinstruktionen zugeordnet werden. Beispielsweise kann ein komplexes Bilddatenobjekt zusammen mit einem einzelnen, einfachen Datenelement übermittelt werden; der Empfänger kann die Trennung vornehmen und das komplexe Bilddatenobjekt seiner eigenen, umfangreichen Sammlung bereits kategorisierter Datenelemente selektiv zuordnen. In einem weiteren Beispiel kann das Bilddatenobjekt zusammen mit mehreren Datenelementen übermittelt werden; der Empfänger kann die Trennung vornehmen und die Datenelemente selektiv einem seiner eigenen Bilddatenobjekte zuordnen.

Neben dem computergestützten Verfahren für den selektiven Zugriff auf Datenelemente einer Datensammlung bezieht sich die vorliegende Erfindung zudem auf Vorrichtungen für den selektiven Zugriff auf Datenelemente einer Datensammlung, insbesondere ein computerbasierter Server und ein Kommunikationsendgerät, sowie ein Computerprogrammprodukt mit Computerprogrammcodemitteln zur Steuerung des computerbasierten Servers und ein Computerprogrammprodukt mit Computerprogrammcodemitteln zur Steuerung des Kommunikationsendgeräts. Die Computerprogrammprodukte umfassen insbesondere ein computerlesbares Medium, welches die betreffenden Computerprogrammcodemittel enthält.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein Kommunikationsendgerät illustriert, das für den selektiven Zugriff auf Datenelemente einer Datensammlung über ein Telekommunikationsnetz mit einem computerbasierten Server verbunden ist.
Figur 2 zeigt ein Beispiel eines auf einer Anzeige dargestellten Bilddatenobjekts, welches mehrere für einen Betrachter erkennbare Bildteilobjekte umfasst.
Figur 3 zeigt ein Blockdiagramm, welches schematisch ein Kommunikationsendgerät illustriert, das einen Server für den selektiven Zugriff auf Datenelemente einer Datensammlung umfasst.
Figur 4 zeigt ein Flussdiagramm, das ein Beispiel einer Schrittsequenz für den selektiven Zugriff auf Datenelemente einer Datensammlung darstellt.

### Wege zur Ausführung der Erfindung

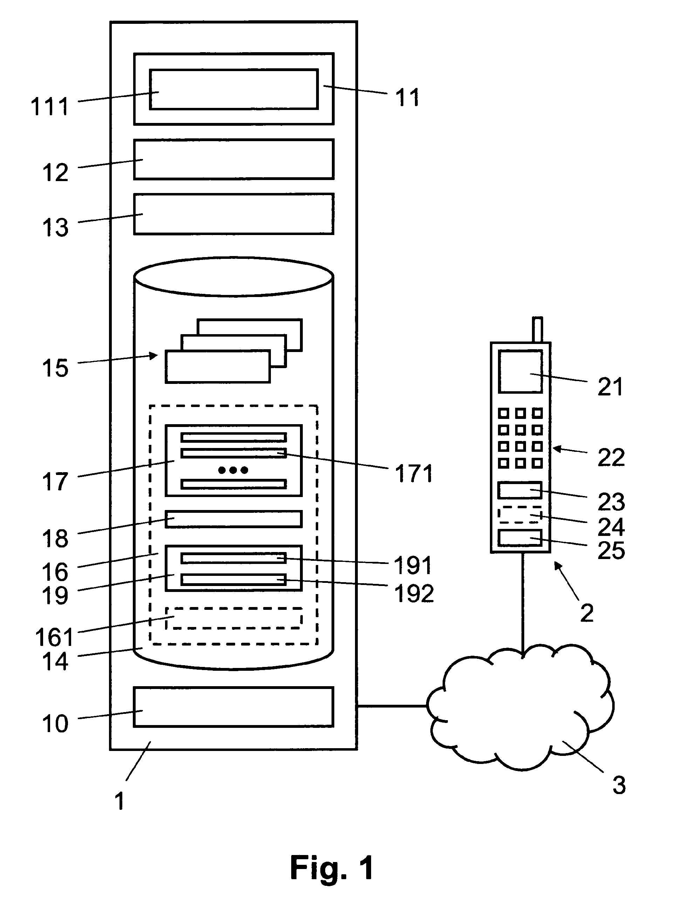

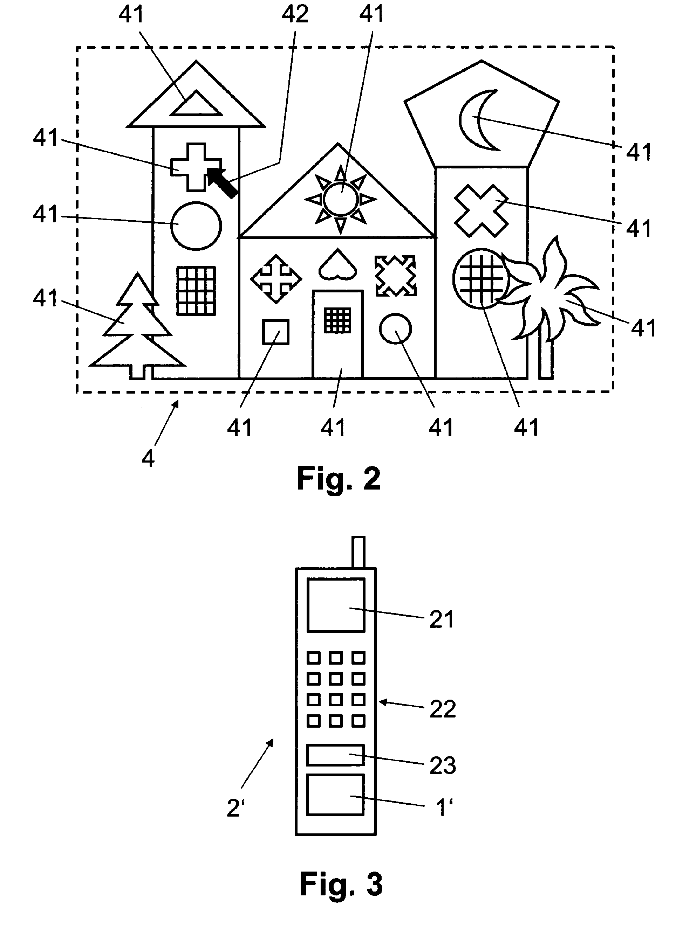

In der Figur 1 bezeichnet das Bezugszeichen 1 einen computerbasierten Server, der den selektiven Zugriff auf Datenelemente 171 einer Datensammlung 17 unterstützt. Wie in der Figur 1 schematisch dargestellt ist, umfasst der Server 1 ein Kommunikationsmodul 10 für die Kommunikation mit einem Kommunikationsendgerät 2 über ein Telekommunikationsnetz 3. Der Server 1 umfasst zudem einen Datenspeicher 14 und verschiedene funktionale Module, nämlich ein Visualisierungsmodul 11, ein Gruppierungsmodul 111, ein Datenzugriffsmodul 13 und ein Objektgenerator 12, welche später beschrieben werden. Die funktionalen Module sind vorzugsweise als programmierte Softwaremodule ausgeführt. Der Computerprogrammcode der Softwaremodule ist Teil eines Computerprogrammprodukts und ist vorzugsweise im Server 1 gespeichert, auf einem computerlesbaren Datenträger, der fest oder entfernbar mit dem Server 1 verbunden ist. Der Server 1 umfasst vorzugsweise einen oder mehrere Computer. In einer Ausführungsvariante, die später mit Bezug zur Figur 3 beschrieben wird, ist der Server 1' direkt in einem Kommunikationsendgerät 2' implementiert. Um die Sicherheit zu erhöhen können die Daten repliziert werden.

Der Datenspeicher 14 umfasst eine Bilddatenobjektsammlung 15 mit Bilddatenobjekten, die auf einer Anzeige 21 darstellbar sind. Die Bilddatenobjekte sind vorzugsweise zweidimensionale Bilder 4, beispielsweise Bildpunktraster (Bitmaps) oder komprimierte Bildformate wie JPEG (Joint Photographic Experts Group) oder GIF (Graphics Interchange Format), die mehrere von einem Betrachter erkennbare und identifizierbare Bildteilobjekte 41 umfassen, wie in der Figur 2 schematisch dargestellt ist. In einer Ausführungsvariante repräsentieren die Bilddatenobjekte ein dreidimensionales Raumobjekt und die Bildteilobjekte 41 sind dreidimensionale Objekte im Raumobjekt. Vorzugsweise sind die einzelnen Bildteilobjekte 41 nicht bloss auf Grund ihrer Positionierung im gesamten Bild 4 erkennbar, sondern unterscheiden sich auch inhaltlich (Form, Farbe, abgebildeter Gegenstand, ...), so dass sie für den Betrachter unterscheidbar sind. Die Bildteilobjekte 41 stellen zudem vorzugsweise Gegenstände dar, welche vom Betrachter assoziativ mit Informationen aus dem Alltag verbindbar sind, beispielsweise ein Telefon, das Telefonnummern assoziiert, ein Zug, der auf Fahrpläne und/oder Zugsverbindungen hinweist, ein Einkaufskorb, der auf Einkaufszettel oder Kassenquittungen hinweist, oder Geldmünzen, die auf Finanzinformationen hindeuten. Den einzelnen Bildteilobjekten 41 sind zweidimensionale respektive dreidimensionale Ortsangaben zugeordnet, welche die örtliche Position und Ausdehnung eines Bildteilobjekts 41 mit Bezug zum Bild 4 des dargestellten Bilddatenobjekts definieren. Die Ortsangaben umfassen beispielsweise Koordinaten und/oder Vektoren, die die Lage und die Form eines Bildteilobjekts 41 im dargestellten Bilddatenobjekt definieren. Auf Grund ihrer definierten Lage und Form sind die einzelnen Bildteilobjekte 41 somit durch einen Benutzer auf einer Anzeige 21 selektierbar. Die Bildteilobjekte 41 werden beispielsweise durch einen Benutzer mittels eines so genannten Pointers 42 (Zeiger), eines Cursors oder einer anderen Positionierungshilfe selektiert, welche durch ein Eingabemodul des Kommunikationsendgeräts 2, 2' gesteuert werden, z.B durch Eingabeelemente 22, eine Computermaus oder sprachgesteuert.

Der Datenspeicher 14 umfasst zudem mehrere Benutzerdatensätze 16, die jeweils einem Benutzer zugeordnet sind, beispielsweise ein identifizierbarer Teilnehmer des Telekommunikationsnetzes 3. Ein Benutzerdatensatz 16 umfasst eine benutzerspezifische Datensammlung 17 mit mehreren Datenelementen 171, ein benutzerspezifisches Bilddatenobjekt 18 respektive eine Referenz auf ein benutzerselektiertes Bilddatenobjekt der Bilddatenobjektsammlung 15, sowie optional ein benutzerspezifisches transferierbares Datenobjekt 161.

Die Datenelemente 171 umfassen jeweils einen Dateninhalt, vorzugsweise in Textform mit alphanumerischen Zeichen, die lesbar und automatisch in akustischer Form wiedergebbar sind. Überdies sind den Datenelementen 171 in der Datensammlung 17 jeweils eines oder mehrere Attribute zugeordnet. Die Attribute geben beispielsweise die Zeit und/oder das Datum der Generierung und/oder des Empfangs eines Datenelements 171 an; die Attribute geben die Datenquelle, den Übermittlungskanal und/oder den Datenlieferanten des Datenelements 171 an; und/oder die Attribute geben eine Inhaltskategorie oder einen Verwendungskontext des Datenelements an.

In der Figur 1 bezeichnet das Bezugszeichen 2 ein Kommunikationsendgerät mit einem Kommunikationsmodul 23 für die Kommunikation über das Telekommunikationsnetz 3. Das Telekommunikationsnetz 3 umfasst ein Festnetz und/oder ein Mobilfunknetz. Das Festnetz ist beispielsweise das öffentliche geschaltete Telefonnetz, ein ISDN-Netz (Integrated Services Digital Network) oder vorzugsweise das Internet oder ein Intranet. Das Mobilfunknetz ist beispielsweise ein GSM-(Global System for Mobile Communication), ein UMTS-Netz (Universal Mobile Telephone System) oder ein anderes, beispielsweise satellitenbasiertes Mobilfunknetz, oder ein WLAN (Wireless Local Area Network). Das Kommunikationsendgerät 2 ist als Mobilfunktelefon oder PDA-Computer (Personal Digital Assistant), als mobiler Notebook, als mobile Spielsstation (z.B. Play Station) oder Laptop-Computer, oder als PC (Personal Computer) ausgeführt. Wie in der Figur 1 dargestellt ist, umfasst das Kommunikationsendgerät 2 in einer Ausführungsvariante ein Datenzugriffsmodul 24, das funktionell dem Datenzugriffsmodul 13 entspricht, und/oder ein lokal gespeichertes Datenobjekt 25, das inhaltlich dem Datenobjekt 161 entspricht.

Die Anzeige 21 kann ein Bildschirm (Flachbildschirm) oder ein Retinal Scanning Display sein, bei dem virtuelle Bilddaten direkt auf die Retina des Benutzers projiziert werden, ohne Bildung eines realen Bildes (Virtual Retinal Scanner).

Wie in der Figur 3 schematisch dargestellt ist, ist der Server 1' direkt in das Kommunikationsendgerät 2' implementiert, welches ansonsten dem Kommunikationsendgerät 2 entspricht. Die Funktionalität und der Inhalt des Servers 1' entspricht im Wesentlichen dem Server 1, jedoch ohne das Kommunikationsmodul 10.

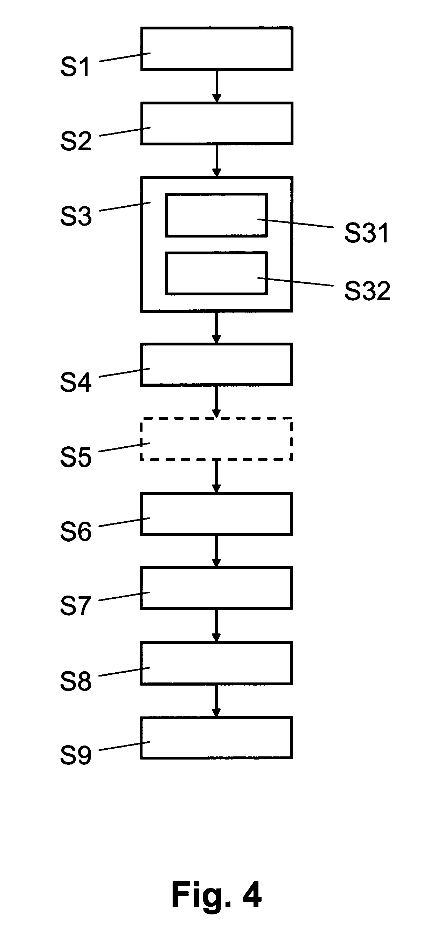

In den folgenden Abschnitten werden mit Bezug zu der Figur 4 mögliche Schrittfolgen und Verfahrensabläufe für den selektiven Zugriff auf Datenelemente 171 der Datensammlung 17 beschrieben.

Im Schritt S1 wird ein benutzerspezifisches Bilddatenobjekt 18 bereitgestellt. Das Bilddatenobjekt 18 wird vorzugsweise durch das Visualisierungsmodul 11 auf Grund von Auswahlinstruktionen vom Benutzer des Kommunikationsendgeräts 2, 2' aus der Bilddatenobjektsammlung 15 gewählt oder als Datenobjekt importiert, z.B. als digitale Fotografie oder Grafik, die vom Benutzer bereitgestellt wird.

Im Schritt S2 werden die Bildteilobjekte 41 definiert. Die Bildteilobjekte 41 werden beispielsweise durch das Visualisierungsmodul 11 mittels eines entsprechend konfigurierten Bildverarbeitungsmoduls automatisch im Bilddatenobjekt 18 bestimmt und/oder auf Grund von Benutzerinstruktionen definiert. Die durch das Visualisierungsmodul 11 bestimmten Bildteilobjekte 41 werden beispielsweise im auf der Anzeige 21 dargestellten zweidimensionalen Bild 4 des Bilddatenobjekts 18 durch grafische Elemente angezeigt, z.B. hervorgehoben durch Umrandung, durch Blinken oder hellere Farbe etc., und durch den Benutzer mittels entsprechender Instruktionen selektiert und akzeptiert. Die Bildteilobjekte 41 können durch den Benutzer im dargestellten zweidimensionalen Bild 4 des Bilddatenobjekts 18 auch durch grafische Operationen, z.B. durch Umrandung, manuell bestimmt und definiert werden. In einer Ausführungsvariante werden den definierten Bildteilobjekten 41 überdies Gruppenbezeichnungen zugeordnet, z.B. durch den Benutzer aus einer Liste oder durch Eingabe über das Eingabemodul. In einer Ausführungsvariante umfassen die Bildobjekte der Bilddatenobjektsammlung 15 bereits schon Definitionen der Bildteilobjekte 41 und möglicherweise auch zugeordnete Gruppenbezeichnungen.

Im Schritt S3 werden die Datenelemente 171 der Datensammlung 17 den definierten Bildteilobjekten 41 zugeordnet. Die Zuordnung 19 der Datenelemente 171 zu den Bildteilobjekten 41 erfolgt durch das Visualisierungsmodul 11 automatisch oder auf Grund von Benutzerinstruktionen. In einer Ausführungsvariante erfolgt die Zuordnung 19 der Datenelemente 171 zu den Bildteilobjekten 41 über einen Schritt S31, in welchem die Datenelemente 171 durch das Gruppierungsmodul 111 einer oder mehreren von verschiedenen Datengruppen zugeordnet werden (Zuordnung 191), und einen Schritt S32, in welchem die Datengruppen jeweils einem der Bildteilobjekte 41 zugeordnet werden (Zuordnung 192). Die Zuordnung 19 der Datenelemente 171 zu den Bildteilobjekten 41 respektive die Zuordnung 191 der Datenelemente 171 zu den Datengruppen erfolgt beispielsweise automatisch auf Grund der zugeordneten Attribute und/oder auf Grund des Dateninhalts (Inhaltsanalyse). Durch das Gruppierungsmodul 111 können überdies auch basierend auf dem Dateninhalt und/oder den bereits vorhandenen Attributen weitere Attribute generiert und einerseits den betreffenden Datenelementen 171 zugeordnet und andererseits bei der Zuordnung 19, 191 der Datenelemente 171 berücksichtigt werden. Zum Beispiel können die neuen Attribute auf Grund statistischer Inhaltsanalysen hinsichtlich Begriffen, die in mehreren textbasierten Datenelementen 171 vorkommen, z.B. mindestens eine definierte Minimalzahl, oder auf Grund von Inhaltsanalysen hinsichtlich bestimmter Begriffe, die in den textbasierten Datenelementen 171 mindestens einmal vorkommen (z.B. "Besprechung" oder "Rechnung"). Vom Benutzer können insbesondere auch Datengruppen definiert werden, zu welchen die Datenelemente 171, je nach Typ der Gruppe, automatisch oder manuell zugeordnete werden, z.B. "Vertraulich", "Ideen für nächste Woche", "Einkaufsliste" etc. Die Zuordnung 19, 191 der Datenelemente 171 kann auch dynamisch ändern, das heisst es können temporäre Datengruppen mit dynamisch änderndem Inhalt gebildet werden, zum Beispiel Gruppen für Anrufe, Eingaben oder Abfragen von letzter Woche, gestern oder heute. Gegebenenfalls erfolgt die Zuordnung 19 der Datenelemente 171 zu den Bildteilobjekten 41 automatisch auf Grund der Gruppenbezeichnungen der Bildteilobjekte 41.

Im Schritt S14 erzeugt der Objektgenerator 12 basierend auf den Schritten S1, S2 und S3 das über das Telekommunikationsnetz 3 transferierbare Datenobjekt 161. Das Datenobjekt 161 umfasst eine Kopie der benutzerspezifischen Datensammlung 17 mit den darin enthaltenen Datenelementen 171. In einer alternativen Ausführungsvariante umfasst das Datenobjekt 161 statt der Datensammlung Angaben für den Zugriff auf die Datenelemente 171 der Datensammlung 17, beispielsweise einen Link auf einen Datenserver, z.B. der Server 1. Das Datenobjekt 161 umfasst zudem eine Kopie des selektierten benutzerspezifischen Bilddatenobjekts 18 mit den verschiedenen Bildteilobjekten 41, und die Zuordnung 19 der Datenelemente 171 zu den Bildteilobjekten 41 des Bilddatenobjekts 18. Die Zuordnung 19 umfasst beispielsweise die Zuordnung 191 der Datenelemente 171 zu jeweils einer oder mehreren Datengruppen, und die Zuordnung 192 der Datengruppen zu jeweils einem der Bildteilobjekte 41 des Bilddatenobjekts. Optional umfasst das Datenobjekt 161 zudem eine Kopie des Datenzugriffsmoduls 13.

Im Schritt S5 wird das generierte Datenobjekt 161 vom Server 1 über das Telekommunikationsnetz 3 an das Kommunikationsendgerät 2 übermittelt und dort als Datenobjekt 25 gespeichert. In der Variante nach Figur 3, wo der Server 1' im Kommunikationsendgerät 2' implementiert ist, erfolgt eine Übermittlung des Datenobjekts 161 nur, wenn das Datenobjekt 161 an ein weiteres Kommunikationsendgerät übertragen werden soll.

Wenn selektiv auf Datenelemente 171 der Datensammlung 17 zugegriffen werden soll, wird das Bilddatenobjekt 18 im Schritt S6 auf der Anzeige 21 des Kommunikationsendgeräts 2, 2' als zwei- oder dreidimensionales Bild 4 dargestellt. Je nach Ausführungsvariante erfolgt die Darstellung durch das Datenzugriffsmodul 13 des Servers 1, welcher über das Telekommunikationsnetz 3 mit dem Kommunikationsendgerät 2 in Verbindung steht, durch das Datenzugriffsmodul 13 des Servers 1', der im Kommunikationsendgerät 2' implementiert ist, durch das Datenzugriffsmodul 24, das im Kommunikationsendgerät 2 implementiert ist, oder durch das Datenzugriffsmodul, das im Datenobjekt 161 in das Kommunikationsendgerät 1 übermittelt wurde.

Im Schritt S7 empfängt das Datenzugriffsmodul 13, 24 Navigations- und Selektionsinstruktionen vom Benutzer des Kommunikationsendgeräts 2, 2', um eines der Bildteilobjekte 41 aus dem dargestellten Bild 4 zu selektieren. Die Navigation erfolgt beispielsweise mittels des Pointers 42. Die Selektion erfolgt beispielsweise durch Positionieren des Pointers 42 über das betreffende Bildteilobjekt 41 und einer Eingabe über das Eingabemodul, beispielsweise mittels einer Maus- oder Funktionstaste oder eines Befehls.

Im Schritt S8 bestimmt das Datenzugriffsmodul 13, 24 die Datenelemente 171, welche dem selektierten Bildteilobjekt 41 zugeordnet sind. Die Bestimmung der Datenelemente 171 erfolgt auf der Basis der Zuordnung 19, je nach Ausführungsvariante unter Berücksichtigung der Zuordnung 191 der Datenelemente zu den Datengruppen und der Zuordnung 192 der Datengruppen zu den Bildteilobjekten 41.

Im Schritt S9 gibt das Datenzugriffsmodul 13, 24 die im Schritt S8 bestimmten Datenelemente wieder, beispielsweise in Textform auf der Anzeige 21 oder in gesprochener Form über einen elektroakustischen Wandler. Falls das Datenobjekt 161 nicht die Datenelemente 171 sondern Angaben für den Zugriff auf die Datenelemente der Datensammlung umfasst, werden die Datenelemente 171 vorgängig, beispielsweise von einem Datenserver, bezogen.

## Patentansprüche

1. Computergestütztes Verfahren für einen selektiven Zugriff auf Datenelemente (171) einer Datensammlung (17), umfassend:
Bereitstellen (S1) eines auf einer Anzeige (21) darstellbaren Bilddatenobjekts (18);
Definieren (S2) von mehreren Bildteilobjekten (41), die jeweils einem Teil einer Darstellung des Bilddatenobjekts (18) entsprechen;
Zuordnen (S3) der Datenelemente (171) zu jeweils mindestens einem der Bildteilobjekte (41);
Selektieren (S7) eines der Bildteilobjekte (41) aus einer Darstellung des Bilddatenobjekts (18) auf der Anzeige (21); und
Wiedergeben (S9) der Datenelemente (171), die dem selektierten Bildteilobjekt (41) zugeordnet sind.

2. Verfahren nach Anspruch 1, **dadurch gekennzeichnet, dass** das Zuordnen (S3) der Datenelemente (171) zu den Bildteilobjekten (41) das Zuordnen der Datenelemente (171) zu jeweils mindestens einer Datengruppe und das Zuordnen der Datengruppen zu jeweils einem der Bildteilobjekte (41) umfasst; und dass die Datenelemente (171) wiedergegeben werden, die der Datengruppe zugeordnet sind, welche dem selektierten Bildteilobjekt (41) zugeordnet ist.

3. Verfahren nach einem der Ansprüche 1 oder 2, **gekennzeichnet durch** Generieren (S4) eines Datenobjekts (161), welches die Datenelemente (171) der Datensammlung (17), das Bilddatenobjekt (18) und die Zuordnung (19) der Datenelemente (171) zu den Bildteilobjekten (41) umfasst; und Übermitteln (S5) des Datenobjekts (161) über ein Telekommunikationsnetz (3) an ein Kommunikationsendgerät (2).

4. Verfahren nach einem der Ansprüche 1 oder 2, **gekennzeichnet durch** Generieren (S4) eines Datenobjekts (161), welches Angaben für den Zugriff auf die Datenelemente (171) der Datensammlung, das Bilddatenobjekt (18) und die Zuordnung (19) der Datenelemente (171) zu den Bildteilobjekten (41) umfasst; und Übermitteln (S5) des Datenobjekts (161) über ein Telekommunikationsnetz (3) an ein Kommunikationsendgerät (2).

5. Verfahren nach einem der Ansprüche 1 bis 4, **dadurch gekennzeichnet, dass** die Datenelemente (171) jeweils einen Dateninhalt in Textform umfassen, dass den Datenelementen (171) jeweils eines oder mehrere Attribute zugeordnet sind, wobei die Attribute mindestens eines aus Zeit, Datum, Datenquelle, Übermittlungskanal und Datenlieferant angeben, und dass die Zuordnung (19) der Datenelemente (171) zu den Bildteilobjekten (41) auf Grund der jeweils zugeordneten Attribute und/oder auf Grund des Dateninhalts erfolgt.

6. Verfahren nach einem der Ansprüche 1 bis 5, **dadurch gekennzeichnet, dass** das Bereitstellen (S1) des Bilddatenobjekts (18) auf Grund einer Benutzerinstruktion und einer entsprechenden Selektion aus einer Sammlung (15) von Bilddatenobjekten erfolgt.

7. Verfahren nach einem der Ansprüche 1 bis 6, **dadurch gekennzeichnet, dass** das Zuordnen (S3) der Datenelemente (171) zu den Bildteilobjekten (41) auf Grund von Benutzerinstruktionen erfolgt.

8. Verfahren nach einem der Ansprüche 1 bis 6, **dadurch gekennzeichnet, dass** den Bildteilobjekten (41) jeweils mindestens eine Gruppenbezeichnung zugeordnet ist, und dass das Zuordnen (S3) der Datenelemente (171) zu den Bildteilobjekten (41) automatisch auf Grund der Gruppenbezeichnungen erfolgt.

9. Verfahren nach einem der Ansprüche 1 bis 8, **dadurch gekennzeichnet, dass** das auf der Anzeige (21) darstellbare Bilddatenobjekt (18) ein dreidimensionales Raumobjekt repräsentiert, dass die Bildteilobjekte (41) dreidimensionale Objekte im dreidimensionalen Raumobjekt repräsentieren, und dass das Selektieren eines der Bildteilobjekte (41) eine Navigation im dreidimensionalen Raumobjekt umfasst.

10. Computerbasierter Server (1, 1') zum Bereitstellen von Datenstrukturen für einen selektiven Zugriff auf Datenelemente (171) einer Datensammlung (17), umfassend:
ein Visualisierungsmodul (11) zum Bereitstellen eines auf einer Anzeige (21) darstellbaren Bilddatenobjekts (18), zum Definieren von mehreren Bildteilobjekten (41), die jeweils einem Teil einer Darstellung des Bilddatenobjekts (18) entsprechen, und zum Zuordnen der Datenelemente (171) zu jeweils mindestens einem der Bildteilobjekte (41); und
ein Visualisierungsmodul (11) zum Selektieren eines der Bildteilobjekte (41) aus einer Darstellung des Bilddatenobjekts (18) auf der Anzeige (21), und zum Wiedergeben der Datenelemente (171), die dem selektierten Bildteilobjekt (41) zugeordnet sind.

11. Server (1, 1') nach Anspruch 10, **gekennzeichnet durch** ein Gruppierungsmodul (111) zum Zuordnen der Datenelemente (171) zu jeweils mindestens einer Datengruppe; wobei das Visualisierungsmodul (11) eingerichtet ist, das Zuordnen der Datenelemente (171) zu den Bildteilobjekten (41) **durch** das Zuordnen der Datengruppen zu jeweils einem der Bildteilobjekte (41) vorzunehmen, und wobei das Visualisierungsmodul (11) eingerichtet ist, die Datenelemente (171) wiederzugeben, die der Datengruppe zugeordnet sind, welche dem selektierten Bildteilobjekt (41) zugeordnet ist.

12. Server (1, 1') nach einem der Ansprüche 10 oder 11, **gekennzeichnet durch** einen Objektgenerator (zum Generieren eines Datenobjekts (161), welches die Datenelemente (171) der Datensammlung, das Bilddatenobjekt (18), und die Zuordnung (19) der Datenelemente (171) zu den Bildteilobjekten (41) umfasst.

13. Server (1, 1') nach Anspruch 12, **dadurch gekennzeichnet, dass** der Objektgenerator (12) eingerichtet ist, das Visualisierungsmodul (11) in das Datenobjekt (161) einzufügen.

14. Server (1, 1') nach einem der Ansprüche 10 bis 13, **dadurch gekennzeichnet, dass** die Datenelemente (171) jeweils einen Dateninhalt in Textform umfassen, dass den Datenelementen (171) jeweils eines oder mehrere Attribute zugeordnet sind, wobei die Attribute mindestens eines aus Zeit, Datum, Datenquelle, Übermittlungskanal und Datenlieferant angeben, und dass das Visualisierungsmodul (11) eingerichtet ist, die Datenelemente (171) auf Grund der jeweils zugeordneten Attribute und/oder auf Grund des Dateninhalts den Bildteilobjekten (41) zuzuordnen.

15. Server (1, 1') nach einem der Ansprüche 10 bis 14, **dadurch gekennzeichnet, dass** das Visualisierungsmodul (11) eingerichtet ist, das Bilddatenobjekt (18) auf Grund einer Benutzerinstruktion und einer entsprechenden Selektion aus einer Sammlung (15) von Bilddatenobjekten bereitzustellen.

16. Server (1, 1') nach einem der Ansprüche 10 bis 15, **dadurch gekennzeichnet, dass** das Visualisierungsmodul (11) eingerichtet ist, die Datenelemente (171) auf Grund von Benutzerinstruktionen den Bildteilobjekten (41) zuzuordnen.

17. Server (1, 1') nach einem der Ansprüche 10 bis 16, **dadurch gekennzeichnet, dass** den Bildteilobjekten (41) jeweils mindestens eine Gruppenbezeichnung zugeordnet ist, und dass das Visualisierungsmodul (11) eingerichtet ist, die Datenelemente (171) automatisch auf Grund der Gruppenbezeichnungen den Bildteilobjekten (41) zuzuordnen.

18. Computerprogrammprodukt umfassend: Computerprogrammcodemittel zur Steuerung eines oder mehrerer Prozessoren einer computerbasierten Vorrichtung, derart, dass die Vorrichtung
ein auf einer Anzeige (21) darstellbares Bilddatenobjekt (18) bereitstellt,
mehrere Bildteilobjekte (41) definiert, die jeweils einem Teil einer Darstellung des Bilddatenobjekts (18) entsprechen;
Datenelemente (171) einer Datensammlung den Bildteilobjekten (41) zuordnet, und
ein Visualisierungsmodul (11) bereitstellt, welches Computerprogrammcodemittel umfasst zur Steuerung eines Prozessors eines Kommunikationsendgeräts (2), derart, dass das Kommunikationsendgerät (2) eines der Bildteilobjekte (41) aus einer Darstellung des Bilddatenobjekts (18) auf der Anzeige (21) selektiert, und die Datenelemente (171) wiedergibt, die dem selektierten Bildteilobjekt (41) zugeordnet sind.

19. Kommunikationsendgerät (2) für einen selektiven Zugriff auf Datenelemente (171) einer Datensammlung (17), umfassend:
eine Anzeige (21) und ein Eingabemodul zur Eingabe von Benutzerinstruktionen;
ein Kommunikationsmodul (23) zum Empfangen eines Datenobjekts über ein Telekommunikationsnetz (3), welches Datenobjekt die Datenelemente (171) der Datensammlung, ein auf der Anzeige (21) darstellbares Bilddatenobjekt (18) mit mehreren in einer Darstellung des Bilddatenobjekts (18) erkennbaren Bildteilobjekten (41), und eine Zuordnung der Datenelemente (171) zu jeweils mindestens einem der Bildteilobjekte (41) umfasst; und
ein Datenzugriffsmodul (24) zum Darstellen des Bilddatenobjekts (18) auf der Anzeige (21), zum Selektieren eines der Bildteilobjekte (41) aus der Darstellung des Bilddatenobjekts (18) basierend auf Benutzerinstruktionen, und zum Wiedergeben der Datenelemente (171), die dem selektierten Bildteilobjekt (41) zugeordnet sind.

20. Kommunikationsendgerät (2) nach Anspruch 19, **dadurch gekennzeichnet, dass** das Kommunikationsmodul (23) eingerichtet ist, das Datenzugriffsmodul (24) dem empfangenen Datenobjekt zu entnehmen und das Datenzugriffsmodul (24) zu aktivieren.

21. Computerprogrammprodukt umfassend: Computerprogrammcodemittel zur Steuerung eines Kommunikationsendgeräts (2), derart, dass das Kommunikationsendgerät (2)
ein Datenobjekt (161) über ein Telekommunikationsnetz (3) empfängt, welches Datenobjekt (161) Datenelemente (171) einer Datensammlung (17), ein auf einer Anzeige (21) des Kommunikationsendgeräts (2) darstellbares Bilddatenobjekt (18) mit mehreren in einer Darstellung des Bilddatenobjekts (18) erkennbaren Bildteilobjekten (41), und eine Zuordnung der Datenelemente (171) zu jeweils mindestens einem der Bildteilobjekte (41) umfasst; und
das Bilddatenobjekt (18) auf der Anzeige (21) darstellt,
eines der Bildteilobjekte (41) aus der Darstellung des Bilddatenobjekts (18) basierend auf Benutzerinstruktionen selektiert, und
die Datenelemente (171) wiedergibt, die dem selektierten Bildteilobjekt zugeordnet sind.

## Geänderte Patentansprüche

### Geänderte Patentansprüche gemäss Regel 137(2) EPÜ.

**1.** Computergestütztes Verfahren für einen selektiven Zugriff auf Datenelemente (171) einer als Datei ausgeführten Datensammlung (17), umfassend:
Bereitstellen (S1) eines auf einer Anzeige (21) darstellbaren Bilddatenobjekts (18);
Definieren (S2) von mehreren Bildteilobjekten (41), die jeweils einem Teil einer Darstellung des Bilddatenobjekts (18) entsprechen;
Zuordnen (S3) der Datenelemente (171) der Datei zu jeweils mindestens einem der Bildteilobjekte (41);
Selektieren (S7) eines der Bildteilobjekte (41) aus einer Darstellung des Bilddatenobjekts (18) auf der Anzeige (21); und
Wiedergeben (S9) der Datenelemente (171) der Datei, die dem selektierten Bildteilobjekt (41) zugeordnet sind.

**2.** Verfahren nach Anspruch 1, **dadurch gekennzeichnet, dass** das Zuordnen (S3) der Datenelemente (171) zu den Bildteilobjekten (41) das Zuordnen der Datenelemente (171) zu jeweils mindestens einer Datengruppe und das Zuordnen der Datengruppen zu jeweils einem der Bildteilobjekte (41) umfasst; und dass die Datenelemente (171) wiedergegeben werden, die der Datengruppe zugeordnet sind, welche dem selektierten Bildteilobjekt (41) zugeordnet ist.

**3.** Verfahren nach einem der Ansprüche 1 oder 2, **gekennzeichnet durch** Generieren (S4) eines Datenobjekts (161), welches die Datenelemente (171) der Datensammlung (17), das Bilddatenobjekt (18) und die Zuordnung (19) der Datenelemente (171) zu den Bildteilobjekten (41) umfasst; und Übermitteln (S5) des Datenobjekts (161) über ein Telekommunikationsnetz (3) an ein Kommunikationsendgerät (2).

**4.** Verfahren nach einem der Ansprüche 1 oder 2, **gekennzeichnet durch** Generieren (S4) eines Datenobjekts (161), welches Angaben für den Zugriff auf die Datenelemente (171) der Datensammlung, das Bilddatenobjekt (18) und die Zuordnung (19) der Datenelemente (171) zu den Bildteilobjekten (41) umfasst; und Übermitteln (S5) des Datenobjekts (161) über ein Telekommunikationsnetz (3) an ein Kommunikationsendgerät (2).

**5.** Verfahren nach einem der Ansprüche 1 bis 4, **dadurch gekennzeichnet, dass** die Datenelemente (171) jeweils einen Dateninhalt in Textform umfassen, dass den Datenelementen (171) jeweils eines oder mehrere Attribute zugeordnet sind, wobei die Attribute mindestens eines aus Zeit, Datum, Datenquelle, Übermittlungskanal und Datenlieferant angeben, und dass die Zuordnung (19) der Datenelemente (171) zu den Bildteilobjekten (41) auf Grund der jeweils zugeordneten Attribute und/oder auf Grund des Dateninhalts erfolgt.

**6.** Verfahren nach einem der Ansprüche 1 bis 5, **dadurch gekennzeichnet, dass** das Bereitstellen (S1) des Bilddatenobjekts (18) auf Grund einer Benutzerinstruktion und einer entsprechenden Selektion aus einer Sammlung (15) von Bilddatenobjekten erfolgt.

**7.** Verfahren nach einem der Ansprüche 1 bis 6, **dadurch gekennzeichnet, dass** das Zuordnen (S3) der Datenelemente (171) zu den Bildteilobjekten (41) auf Grund von Benutzerinstruktionen erfolgt.

**8.** Verfahren nach einem der Ansprüche 1 bis 6, **dadurch gekennzeichnet, dass** den Bildteilobjekten (41) jeweils mindestens eine Gruppenbezeichnung zugeordnet ist, und dass das Zuordnen (S3) der Datenelemente (171) zu den Bildteilobjekten (41) automatisch auf Grund der Gruppenbezeichnungen erfolgt.

**9.** Verfahren nach einem der Ansprüche 1 bis 8, **dadurch gekennzeichnet, dass** das auf der Anzeige (21) darstellbare Bilddatenobjekt (18) ein dreidimensionales Raumobjekt repräsentiert, dass die Bildteilobjekte (41) dreidimensionale Objekte im dreidimensionalen Raumobjekt repräsentieren, und dass das Selektieren eines der Bildteilobjekte (41) eine Navigation im dreidimensionalen Raumobjekt umfasst.

**10.** Computerbasierter Server (1, 1') zum Bereitstellen von Datenstrukturen für einen selektiven Zugriff auf Datenelemente (171) einer als Datei ausgeführten Datensammlung (17), umfassend:
ein Visualisierungsmodul (11) zum Bereitstellen eines auf einer Anzeige (21) darstellbaren Bilddatenobjekts (18), zum Definieren von mehreren Bildteilobjekten (41), die jeweils einem Teil einer Darstellung des Bilddatenobjekts (18) entsprechen, und zum Zuordnen der Datenelemente (171) der Datei zu jeweils mindestens einem der Bildteilobjekte (41); und
ein Visualisierungsmodul (11) zum Selektieren eines der Bildteilobjekte (41) aus einer Darstellung des Bilddatenobjekts (18) auf der Anzeige (21), und zum Wiedergeben der Datenelemente (171) der Datei, die dem selektierten Bildteilobjekt (41) zugeordnet sind.

**11.** Server (1, 1') nach Anspruch 10, **gekennzeichnet durch** ein Gruppierungsmodul (111) zum Zuordnen der Datenelemente (171) zu jeweils mindestens einer Datengruppe; wobei das Visualisierungsmodul (11) eingerichtet ist, das Zuordnen der Datenelemente (171) zu den Bildteilobjekten (41) **durch** das Zuordnen der Datengruppen zu jeweils einem der Bildteilobjekte (41) vorzunehmen, und wobei das Visualisierungsmodul (11) eingerichtet ist, die Datenelemente (171) wiederzugeben, die der Datengruppe zugeordnet sind, welche dem selektierten Bildteilobjekt (41) zugeordnet ist.

**12.** Server (1, 1') nach einem der Ansprüche 10 oder 11, **gekennzeichnet durch** einen Objektgenerator (zum Generieren eines Datenobjekts (161), welches die Datenelemente (171) der Datensammlung, das Bilddatenobjekt (18), und die Zuordnung (19) der Datenelemente (171) zu den Bildteilobjekten (41) umfasst.

**13.** Server (1, 1') nach Anspruch 12, **dadurch gekennzeichnet, dass** der Objektgenerator (12) eingerichtet ist, das Visualisierungsmodul (11) in das Datenobjekt (161) einzufügen.

**14.** Server (1, 1') nach einem der Ansprüche 10 bis 13, **dadurch gekennzeichnet, dass** die Datenelemente (171) jeweils einen Dateninhalt in Textform umfassen, dass den Datenelementen (171) jeweils eines oder mehrere Attribute zugeordnet sind, wobei die Attribute mindestens eines aus Zeit, Datum, Datenquelle, Übermittlungskanal und Datenlieferant angeben, und dass das Visualisierungsmodul (11) eingerichtet ist, die Datenelemente (171) auf Grund der jeweils zugeordneten Attribute und/oder auf Grund des Dateninhalts den Bildteilobjekten. (41) zuzuordnen.

**15.** Server (1, 1') nach einem der Ansprüche 10 bis 14, **dadurch gekennzeichnet, dass** das Visualisierungsmodul (11) eingerichtet ist, das Bilddatenobjekt (18) auf Grund einer Benutzerinstruktion und einer entsprechenden Selektion aus einer Sammlung (15) von Bilddatenobjekten bereitzustellen.

**16.** Server (1, 1') nach einem der Ansprüche 10 bis 15, **dadurch gekennzeichnet, dass** das Visualisierungsmodul (11) eingerichtet ist, die Datenelemente (171) auf Grund von Benutzerinstruktionen den Bildteilobjekten (41) zuzuordnen.

**17.** Server (1, 1') nach einem der Ansprüche 10 bis 16, **dadurch gekennzeichnet, dass** den Bildteilobjekten (41) jeweils mindestens eine Gruppenbezeichnung zugeordnet ist, und dass das Visualisierungsmodul (11) eingerichtet ist, die Datenelemente (171) automatisch auf Grund der Gruppenbezeichnungen den Bildteilobjekten (41) zuzuordnen.

**18.** Computerprogrammprodukt umfassend: Computerprogrammcodemittel zur Steuerung eines oder mehrerer Prozessoren einer computerbasierten Vorrichtung, derart, dass die Vorrichtung
ein auf einer Anzeige (21) darstellbares Bilddatenobjekt (18) bereitstellt,
mehrere Bildteilobjekte (41) definiert, die jeweils einem Teil einer Darstellung des Bilddatenobjekts (18) entsprechen;
Datenelemente (171) einer als Datei ausgeführten Datensammlung den Bildteilobjekten (41) zuordnet, und
ein Visualisierungsmodul (11) bereitstellt, welches Computerprogrammcodemittel umfasst zur Steuerung eines Prozessors eines Kommunikationsendgeräts (2), derart, dass das Kommunikationsendgerät (2) eines der Bildteilobjekte (41) aus einer Darstellung des Bilddatenobjekts (18) auf der Anzeige (21) selektiert, und die Datenelemente (171) der Datei wiedergibt, die dem selektierten Bildteilobjekt (41) zugeordnet sind.

**19.** Kommunikationsendgerät (2) für einen selektiven Zugriff auf Datenelemente (171) einer als Datei ausgeführten Datensammlung (17), umfassend:
eine Anzeige (21) und ein Eingabemodul zur Eingabe von Benutzerinstruktionen;
ein Kommunikationsmodul (23) zum Empfangen eines Datenobjekts über ein Telekommunikationsnetz (3), welches Datenobjekt die Datenelemente (171) der Datei, ein auf der Anzeige (21) darstellbares Bilddatenobjekt (18) mit mehreren in einer Darstellung des Bilddatenobjekts (18) erkennbaren Bildteilobjekten (41), und eine Zuordnung der Datenelemente (171) der Datei zu jeweils mindestens einem der Bildteilobjekte (41) umfasst; und
ein Datenzugriffsmodul (24) zum Darstellen des Bilddatenobjekts (18) auf der Anzeige (21), zum Selektieren eines der Bildteilobjekte (41) aus der Darstellung des Bilddatenobjekts (18) basierend auf Benutzerinstruktionen, und zum Wiedergeben der Datenelemente (171) der Datei, die dem selektierten Bildteilobjekt (41) zugeordnet sind.

**20.** Kommunikationsendgerät (2) nach Anspruch 19, **dadurch gekennzeichnet, dass** das Kommunikationsmodul (23) eingerichtet ist, das Datenzugriffsmodul (24) dem empfangenen Datenobjekt zu entnehmen und das Datenzugriffsmodul (24) zu aktivieren.

**21.** Computerprogrammprodukt umfassend: Computerprogrammcodemittel zur Steuerung eines Kommunikationsendgeräts (2), derart, dass das Kommunikationsendgerät (2)
ein Datenobjekt (161) über ein Telekommunikationsnetz (3) empfängt, welches Datenobjekt (161) Datenelemente (171) einer als Datei ausgeführten Datensammlung (17), ein auf einer Anzeige (21) des Kommunikationsendgeräts (2) darstellbares Bilddatenobjekt (18) mit mehreren in einer Darstellung des Bilddatenobjekts (18) erkennbaren Bildteilobjekten (41), und eine Zuordnung der Datenelemente (171) der Datei zu jeweils mindestens einem der Bildteilobjekte (41) umfasst; und
das Bilddatenobjekt (18) auf der Anzeige (21) darstellt,
eines der Bildteilobjekte (41) aus der Darstellung des Bilddatenobjekts (18) basierend auf Benutzerinstruktionen selektiert, und
die Datenelemente (171) der Datei wiedergibt, die dem selektierten Bildteilobjekt zugeordnet sind.
